# EUROPEAN PATENT APPLICATION

(11) **EP 0 784 035 A1**
(43) Date of publication of application: **16.07.1997**
(21) Application number: 95203578.0
(22) Date of filing: 22.12.1995
(51) Int. Cl.: C04B 18/02, C04B 18/06, B01J 2/00

(54) **Method for processing particulate materials into hardened granules**

(71) Applicant: Hoogovens Technical Services Energy & Environment BV, 1970 CA IJmuiden (NL)
(72) Inventor: Mahadew, Dewanand, NL-2405 XZ Alphen a/d Rijn (NL)
(74) Representative: Hansen, Willem Joseph Maria

(57) **Abstract**

A method for processing a particulate material into hardened granules, comprising the steps of:
(i) providing the material with a grain size distribution satisfying 90 % by weight smaller than 2 mm and having a moisture content of lower than 15 % by weight;
(ii) adding 2 - 12 % by weight expressed as calcium oxide of a binder comprising a calcium compound which produces calciumhydroxide in the presence of water and 1 - 6 % by weight of an additive comprising a silicium compound which produces silicium oxide in the presence of calciumhydroxide to the material;
(iii) adding to the material, binder and additive 20 - 50 % by weight of water;
(iv) intensively mixing into a mixture;
(v) forming granules;
(vi) hardening said granules at a temperature above 50 °C and below 100 °C in the presence of an embedding material capable of absorbing water and suitable for avoiding sticking together of the granules.

## Description

The invention relates to a method for the production of hardened granules out of particulate materials like fine divided carbonaceous materials, organic materials and/or a mixture of these materials, fine anorganic materials like dust from base metals ore and other industrial raw materials, for utilization of these granules as fuel, reductant, raw material, etc. Several processes for the production of hardened granules are known wherein granules are produced by mixing of either an inorganic or an organic filler with an inorganic binder and water followed by granulation of the said mixture and hardening the so produced granules in an embedding material at an elevated temperature e.g. by dosing steam in a reactor.

According to the known processes in the art of producing hardened granules materials like fly-ash are used as the filler in the mixture to be granulated, and the granules so produced are used as a raw material in the manufacturing of building articles and other miscellaneous purposes related to the building industry.

For the utilization of particulate residual or raw solid materials or mixtures thereof not consisting of mainly fly ash components, e.g. having a substantial carbon content of more than 20 %, no granulation process exists.

In accordance with the present invention there is provided a method for processing a particulate material into hardened granules, comprising the steps of:
(i) providing the material with a grain size distribution satisfying 90 % by weight smaller than 2 mm and having a moisture content of lower than 15 % by weight;
(ii) adding 2 - 12 % by weight expressed as calcium oxide of a binder comprising a calcium compound which produces calciumhydroxide in the presence of water and 1 - 6 % by weight of an additive comprising a silicium compound which produces silicium oxide in the presence of calciumhydroxide to the material;
(iii) adding to the material, binder and additive 20 - 50 % by weight of water;
(iv) intensively mixing into a mixture;
(v) forming granules;
(vi) hardening said granules at a temperature above 50 °C and below 100 °C in the presence of an embedding material capable of absorbing water and suitable for avoiding sticking together of the granules.

The particulate material to be processed according to the invention can be a partly pyrolysed material, including for example a gasification residue from the gasification of carbonaceous solids such as black coal, lignite (brown coal) or wood.

Other materials are organic carbonaceous material like chars from various sources, wood charcoal, activated carbon from the partial combustion of coca-nut shells or the like, and coke, in particular derived from black coking coal, etc. but also anorganic fine materials like base metal containing ore, furnace dust, residues from recycling processes, dust from bulk materials handling in terminals, harbours, industries, etc.

The invention is also applicable to pretreated and upgraded residues, where pretreatment of wet and or coarse material takes place by drying and/or crushing, milling, etc. in order to obtain a fine product for further treatment and upgrading is obtained by increasing the carbon content thereof and/or reducing the content of harmful contaminants, for example phosphorous sulphur, heavy metals, specific components, etc.

However, with respect to carbonaceous material the invention is not limited to pyrolysed, partly pyrolysed or natural carbonaceous substances, but extends to carbonaceous particulate materials selected from the group consisting of bituminous black coal, subbituminous black coal, brown coal, coal fines, coke, char, anthracite, wood derived charcoal, gasification residue, activated carbon, carbon black and duff coal, as is and after upgrading.

Preferably at least 99 % of the particulate carbonaceous material, for example said coke, char, anthracite, wood derived charcoal and duff coal is in the overall particle size range of 5 to 2000 µm, more preferably at least 50 % is in the overall particle size range of 100 to 1000 µm. In case of a coarser material the indicated preferable grainsize can be achieved by crushing and milling.

In the invention the binder is selected from one or more of the group consisting of calcium oxide, calcium hydroxide, lime, latent hydraulic components which produce calcium hydroxide when mixed with water, gypsum and calcined dolomite, which may optionally be partly or wholly slaked.

In a preferred embodiment of the invention the binder expressed as calcium oxide is:
- between 2 and 12 % weight by weight of the particulate material, more preferably
- between 4 and 10 % weight by weight of the particulate material, most preferably
- between 6 and 8 % weight by weight of the particulate material.

The additive used to obtain the desired reactions is a silica containing composition like sodium silicate, magnesium silicate or another silica composition with the ability to release silica under the presence of calcium hydroxide.

The amount of the silica containing composition required for the desired reactions with the binder expressed as silicium oxide is:
- between 1 and 6 % weight by weight of the particulate material, more preferably
- between 2 and 5 % weight by weight of the particulate material, most preferably
- between 2 and 4 % weight by weight of the particulate material.

According to further preferred features of the invention the embedding material has a water absorption capacity of at least 8 % by its own weight, more preferably the embedding material has a water absorption capacity of at least 10 %, most preferably the embedding material has a water absorption capacity of between 15 and 25 %.

In accordance with yet another preferred embodiment of the invention the embedding material is between 20 and 80 % by volume of the granulated product, more preferably between 30 and 60 % by volume of the granulated carbonaceous composition, most preferably between 30 and 50 % by volume of the granulated (green) material composition.

In another embodiment of the invention at least 80 % of the embedding material is in the overall particle size range of 2 to 1200 µm and 90 % is smaller than 2000 µm.

Preferably the embedding material is the particulate material material itself, fly-ash or another powder like material from coal combustion, gasification, etc.

Another embodiment of the invention is the possibility to recycle the used embedding material by drying this material to a moisture content of lower than 5 % by weight after it is separated from the hardened granules.

A further aspect of the invention when the particulate material is a carbonaceous material is the use of the hardened granules as a fuel, a reducing agent, a gasification raw material, a carbide production raw material. The use of upgraded carbonaceous residues, in the said granules as a reducing agent, is of particular importance in the reduction of base metals, for example ferrous metals and other base metals products, but in particular in the industries where low levels of contaminants like phosphorus and sulphur is of the utmost importance.

Another aspect of the invention is the processing of dust from gas cleaning systems, carry-over material, foundry dust, dust from ore handling, etc. into granules which can advantageously be used to extract metals. Herewith an interesting industrial application of these dusty materials is achieved.

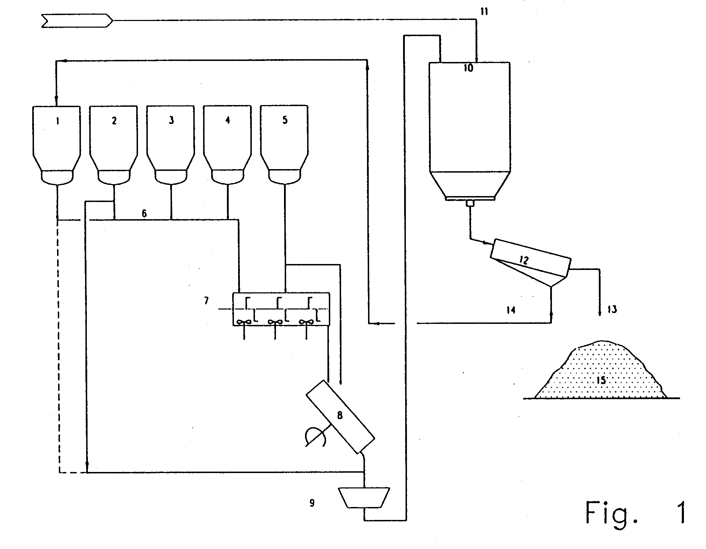

The invention will now be described, by way of example only, with reference to the accompanying drawing which represents a block diagram of an installation for executing an embodiment of the invention.

In case of wet and/or coarse material a pretreatment step comprising of drying, crushing or milling will be required to achieve a processable material.

The installation as illustrated in the block diagram comprises a mixer 7, receiving the particulate material from a material supply hopper 2, the binder calcium oxide from a binder supply hopper 3, the additive a silicate composition from an additive supply hopper 4, water from a water supply container 5 and optionally other components from a miscellaneous supply hopper. The materials are premixed in a screw conveyor 6 and dosed in the high speed, high shear mixer 7, mixes the above mentioned components to obtain the desired homogeneous composition.

This composition is then transported to a granulator 8, the granules produced in granulator 8, are deposited upon a belt together with a dry material for embedding 9. The embedding material is supplied from hopper 1.

The embedded granules are conveyed into a hardening reactor 10. By means of steam from steam supply 11, the temperature of the embedded granules is elevated to the desired temperature.

After hardening, the hardened granules 15 are obtained by separating the granules 13 from the embedding material 14 by means of screen 12. The embedding material 14 can be recycled into the process if it is the same particulate material or after drying re-used embedding material when it is a different material. The invention will furthermore be illustrated by means of the following examples.

### Example I

Carbonaceous residue from a gasification process as the particulate material, having a carbon content of 45 % and a moisture content of 52,5 %, was dried to a moisture content of 14 % and mixed with 7 % of lime as binder and 3 % sodium silicate as additive. These materials were firstly premixed and then, under the addition of water, intensively mixed in a high intensity mixer. This resulted in a so-called green mix. The green mixture had a moisture content of 24,3 % and a pH of 12,2.

The green mix was then converted to granules in a granulator. The moisture content of the resultant green granules was 27,5 %.

The green granules were embedded in the same but dried carbonaceous residue with a moisture content of 3 % as the embedding material and transported to a curing silo in which it was heated up by dosing of steam. Curing took place at 100 % relative humidity at a temperature of about 85 °C for 20 hours.

After curing the material was screened and the embedding material recovered for use to produce green pellets. In another test the same was repeated, however the embedding material was dried after screening and used again as embedding material. In another test the green pellets were embedded in coal fly-ash, which was dried for re-use as embedding material.

The resultant granule strength measured for granules of a mean grain size ⌀ 10 mm in all these cases was 6,2 N/mm², ± 10 %.

Alternative investigated binders to process this residue include binders like cement and bentonite in quantities of between 2 and 10 %. Granules strengths then obtained were in the range from 0,6 N/mm² to 1,2 N/mm² only.

### Example II

Example I is repeated, however now instead of the high intensity mixer a conventional mixer of the type normally used for mixing concrete components was used. All other features of the process were carefully held the same. The resultant granules strength was now 2,3 N/mm² measured for ⌀ 10 mm granules.

### Example III

Example I was repeated with 4 % lime addition as binder and the resultant granule strength, size ⌀ 10 mm, was 1,6 N/mm².

### Example IV

The procedure of example I was repeated without however adding any additive. A granule strength of 2,5 and 3,0 N/mm² (at size ⌀ 10 mm) was obtained.

### Example V

Example I is repeated with upgraded gasifier residue as the particulate material having a carbon content of 75 % and a moisture content of 42,7 % as a raw material. The resultant granules strength was 7,2 N/mm² (size ⌀ 10 mm).

### Example VI

Example I is repeated using anthracite as the particulate material. The anthracite fines have a carbon content of 85 % and a moisture content of 30 %. Prior to processing the material was dried to a moisture content of 14 %.The resultant granules strength was 6,5 N/mm² (size ⌀ 10 mm).

### Example VII

Example I is repeated using coal particles and fines with a size distribution of 0,5 - 200 mm as the particulate material and embedding material. Prior to processing the material was crushed and ground to particles smaller than 2 mm. The resultant granules strength was 6,3 N/mm² (size ⌀ 10 mm).

### Example VIII

Fines from iron ore resulting from transport and handling of the ore were processed as the particulate material according to the same method as example I, using both fine ore and coal fly-ash as embedding material. The resultant granules strength was 5,9 N/mm² (size ⌀ 10 mm).

### Example IX

Example I was repeated however now a chromium ore was used as the particulate material for producing the granules.

The resultant granules strength was 6,1 N/mm² (size ⌀ 10 mm).

### Example X

Example I was repeated however now an iron ore dust and fine coke mixture was used as the particulate material to produce the granules.

The resultant granules strength was 4,8 N/mm² (size ⌀ 10 mm).

### Example XI

Example I is repeated however now a mixture containing of equal amounts of chromium dust and fine coal was used as the particulate material to produce the granules.

The resultant granules strength was 6,0 N/mm² (size ⌀ 10 mm).

## Claims

1. A method for processing a particulate material into hardened granules, comprising the steps of:
(i) providing the material with a grain size distribution satisfying 90 % by weight smaller than 2 mm and having a moisture content of lower than 15 % by weight;
(ii) adding 2 - 12 % by weight expressed as calcium oxide of a binder comprising a calcium compound which produces calciumhydroxide in the presence of water and 1 - 6 % by weight of an additive comprising a silicium compound which produces siiicium oxide in the presence of calciumhydroxide to the material;
(iii) adding to the material, binder and additive 20 - 50 % by weight of water;
(iv) intensively mixing into a mixture;
(v) forming granules;
(vi) hardening said granules at a temperature above 50 °C and below 100 °C in the presence of an embedding material capable of absorbing water and suitable for avoiding sticking together of the granules;

2. A method as claimed in claim 1 further comprising intensively mixing between step (ii) and (iii).

3. A method as claimed in claim 1 or claim 2 wherein the particulate material comprises more than 20 % by weight carbon.

4. A method as claimed in any preceding claim wherein the particulate material comprises more than 10 % by weight of a metaloxide.
